# EUROPEAN PATENT SPECIFICATION

(11) **EP 3 376 858 B1**
(45) Date of publication and mention of the grant of the patent: **26.10.2022**
(21) Application number: 16865815.1
(22) Date of filing: 10.11.2016
(51) Int. Cl.: A01K 73/045

(54) **TRAWL DOOR WITH ADJUSTMENT MEANS**
SCHLEPPNETZKLAPPE MIT VERSTELLMÖGLICHKEITEN
PANNEAU DE CHALUT AVEC MOYEN DE RÉGLAGE

(30) Priority: 18.11.2015 DK 201570741; 14.04.2016 DK 201670229
(43) Date of publication of application: 26.09.2018
(73) Proprietor: MLD ApS, 6710 Esbjerg V (DK)
(72) Inventor: MUELLER, Jan, 6710 Esbjerg V (DK)
(74) Representative: Budde Schou A/S
(86) International application number: PCT/DK2016/050360
(87) International publication number: WO 2017/084670

(56) References cited:
- WO-A1-2013/014507
- WO-A1-2013/014507
- WO-A1-2015/055207
- WO-A1-2015/055207
- GB-A- 2 492 652
- US-A- 5 283 972
- US-A1- 2008 022 913
- US-A1- 2008 022 913
- US-A1- 2008 271 356
- US-A1- 2008 271 356

## Description

### TECHNICAL FIELD

The present disclosure relates generally to trawl doors used for trawl fishing, and more particularly, to trawl doors adapted for stable and efficient operation.

### BACKGROUND OF THE INVENTION

Modern trawl fisheries are complicated by an increase in operating costs due primarily to increasingly expensive fuel costs affecting both the catch of as well as the transportation to market of fish and value added fish product. The increase in operating costs in combination with the tendency of regulatory authorities to impose fixed catch quotas in one form or another have combined to force trawl fishing vessel operators to increase the efficiency of their trawl systems. One impact of this demand for increased efficiency of the trawl system is a demand for increased trawl door efficiency, and in particular an ever increasing need for trawl doors that are efficient at shallow depths and high speeds, as modern trawling increasingly requires economic operations at shallow depths and high speeds.

In addition, more and more modern trawling vessels must participate in a variety of different fisheries in order to be economical, and thus must use a variety of different trawls, having different requirements for the opening parameters of their trawl mouths. For example, some fisheries require trawls exhibiting a high vertical opening and a moderate horizontal opening (high opening trawls), meaning that the trawl doors should provide less spread and thus should generate less water resistance, while other fisheries require trawls exhibiting a low vertical opening and a maximal horizontal opening (wide body trawls), meaning maximal spreading forces are needed from the trawl doors.

While a towed trawl door having a particular shape may operate stably throughout a range of angle of attack, when towed through water at a larger angle of attack trawl doors often exhibit instability and/or low efficiency. Moreover, how the towing vessel maneuvers can vary a trawl door's angle of attack.

Trawl doors operating at large angles of attack create enough drag induced directional forces on the trawl doors so as to impart sufficient stability to the trawl door system to thereby maintain the trawl doors in a workable orientation in the presence of a multitude of destabilizing forces routinely imparted to a trawl door during use. Destabilizing forces result from, for example, side currents, imperfections in rigging, and loss of forward through-water speed affecting an inboard trawl door during turning of a trawling vessel. For example, when a towing vessel turns the inboard trawl door can become almost stationary relative to the water. A similar situation can arise when a trawl door experiences a strong side current. Another condition which can cause trawl door instability is when some portion of the trawl contacts the sea floor. As is readily apparent, a trawl contacting the sea floor increases the force applied to the trawl door through the lower towing bridle in comparison with the force applied through the upper towing bridle. Stabilizing trawl doors when they operate under conditions such as those described above usually requires that the trawl doors operate at a larger angle of attack particularly at slower towing speeds.

US 2008271356 and WO 2015/055207 A1 disclose trawl doors with an upper, a lower, and a middle frame defining an intermediate frame positioned between the upper and lower frames, thereby establishing an upper section. Panels of aerofoil construction are provided, which are placed over each other and connected to the frames in their respective ends. There are no movable and remotely controllable flaps mounted under any of the panels, such that the flaps form part of the distal surface of distal panels, hereby rendering them hollow. Other trawl doors are disclosed in GB2492652 A.

Higher angles of attack are required at slower towing speeds to obtain a sufficiently large drag induced force vector required to stabilize trawl doors at slower towing speeds. Furthermore, when trawl doors lose their ability to spread they may tangle with each other.

There exists a long felt need for a trawl door that is highly efficient at larger angles of attack and can thus be used at slower towing speeds, while not markedly larger in size than existing trawl doors.

Furthermore, there exists a desire in the industry for a highly efficient trawl door that operates well both at faster towing speeds and smaller angles of attack as well as at slower towing speeds and larger angles of attack.

### SUMMARY OF THE INVENTION

The invention relates to a trawl door for fishing. The trawl door is based upon aeronautical principles transformed to hydrodynamic principles.

The door is based upon curved airfoils to give maximum lift force and minimum drag. The remote wireless or wired controlled flaps give the opportunity to increase the lift force, and thereby increase the spreading ability of the doors as well by changing the heel angle of the doors, the opportunity to do vertical and horizontal adjustment is possible.

Specifically the present invention provides a spreading device, such as a trawl door (1), comprising:
an upper frame (2) defining a top edge of the device;
a lower frame (3) defining a bottom edge of the device;
a middle frame (4) defining an intermediate frame positioned between the upper (2) and lower (3) frames thereby establishing an upper and lower section;
a lower proximal panel (5) and lower distal panel (6) provided in the lower section and connected between the lower (3) and middle (4) frames as well as an upper proximal panel (7) and an upper distal panel (8) provided in the upper section and connected between the middle (4) and upper (2) frames, said panels (5, 6, 7, 8) being of aerofoil construction and connected to the frames in their respective ends; and
flaps (9) mounted under the distal panels (6, 8) and connected to driving units, the flaps (9) adapted to be controlled remotely, when the device is in use being towed through the water;
wherein the proximal (5, 7) and distal (6, 8) panels are superimposed, i.e placed over each other, and wherein the lower distal panel (6) and upper distal panel (8) have a distal surface (6', 8') rendering them hollow, wherein the flaps (9) constitute a part of the distal surface.

In a preferred embodiment of the invention the flaps (9) are adapted to move relative to each other. Also preferred, the flaps (9) are integrated in the lower parts (6', 8') of the distal panels (6, 8).

In a particularly preferred embodiment of the present invention the spreading device may be provided with movable panels of aerofoil construction rotatably connected to the frames in their respective ends. Such movable panels are preferably positioned further proximal to the respective proximal panels. These movable panels are adapted to be controlled remotely and further assist the horizontal flaps (12) to control the position of the spreading device in the water.

A lower mesial panel (10) is preferably imposed between the lower proximal (5) and distal (6) panels. Further, it is preferred that an upper mesial panel (11) is imposed between the upper proximal (7) and distal (8) panels.

In a preferred embodiment of the present invention the chord of the mesial panel (10, 11) is not parallel with the chords of the proximal (5, 7) and distal panels (6, 8).

The spreading device may be provided with horizontal flaps (12) provided on the upper, middle, and/or lower frame in order to improve the control of the device in the vertical plane. In this respect the horizontal flaps (12) are adapted to be controlled remotely.

In a preferred embodiment the lower distal panel (6) and upper distal panel (8) have a distal surface (6', 8'), preferably about 2-30 cm remote from the opposing aerofoil surface of the panel thereby rendering them hollow, wherein the flaps (9) constitute a part of the distal surface. The distal surface (6', 8') of each distal panel (6, 8) is preferably concave whereas the opposing surface is convex. In a preferred embodiment fixation means are provided in the device for pulling after a vessel.

Configured in this way, the improved trawl door is improved in comparison with a conventional trawl door. Especially the trawl door of the present invention improves stability when the trawl door is towed through water at a high angle of attack. Further, it produces less door drag.

### BRIEF DESCRIPTION OF DRAWINGS

Figure 1 shows in perspective a trawl door of the present invention.
Figure 2 shows lower cut of the trawl door.
Figure 3 shows a trawl door with horizontal flap.
Figure 4 shows an alternative embodiment of the trawl door with slats.

### DETAILED DESCRIPTION OF THE INVENTION

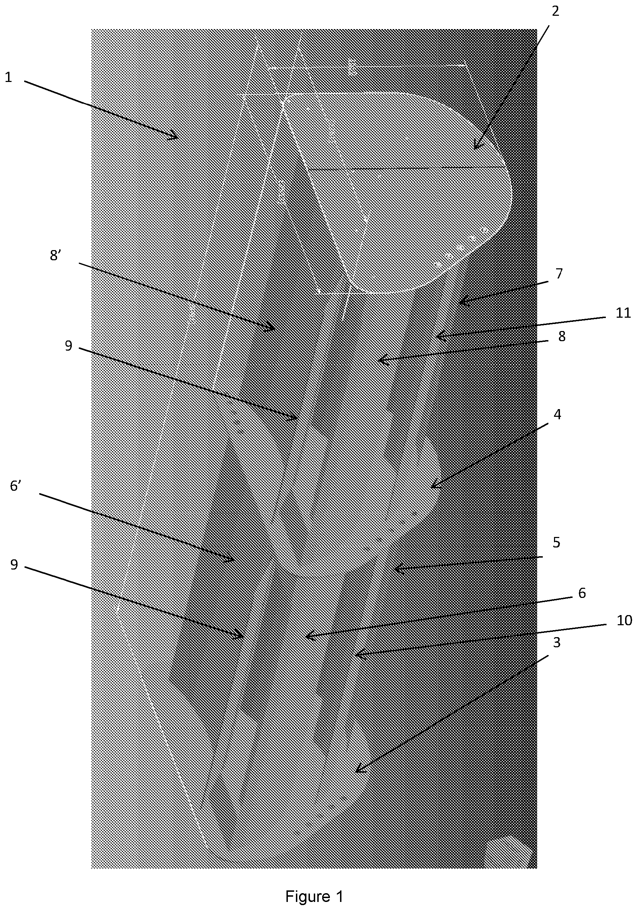

Referring to Figure 1 there is shown a trawl door (1) of a preferred embodiment of the present invention. It has an upper frame (2) defining a top edge of the door; a lower frame (3) defining a bottom edge of the door; a middle frame (4) defining an intermediate frame positioned between the upper (2) and lower (3) frames thereby establishing an upper and lower section; a lower proximal panel (5) and lower distal panel (6) provided in the lower section and connected between the lower (3) and middle (4) frames as well as an upper proximal panel (7) and an upper distal panel (8) provided in the upper section and connected between the middle (4) and upper (2) frames, said panels (5, 6, 7, 8) being of aerofoil construction and connected to the frames in their respective ends; and flaps (9) mounted below the distal panels (6, 8) and connected to driving units, the flaps (9) adapted to be controlled remotely, when the device is in use being towed through the water; wherein the proximal (5, 7) and distal (6, 8) panels are superimposed and parallel.

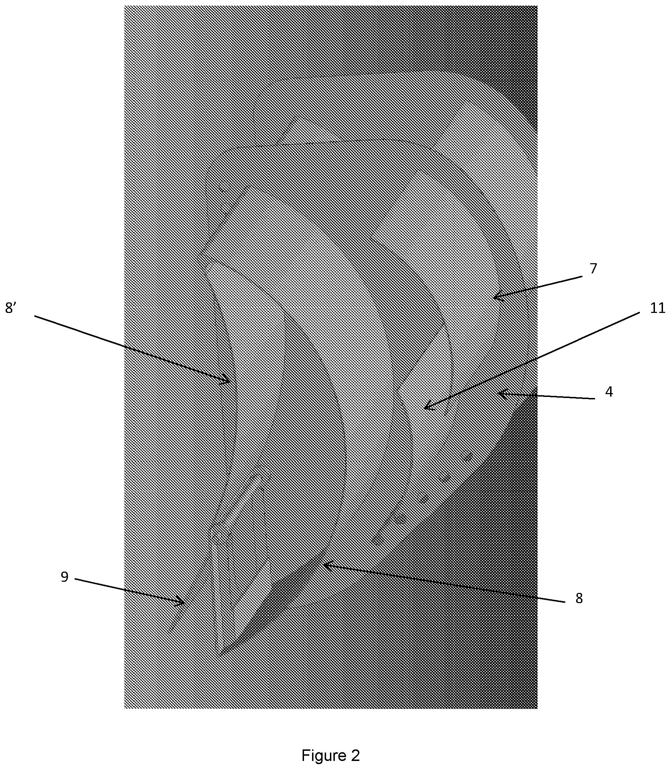

Referring to Figure 2 there is shown a sectional view of the trawl door of Figure 1 in order to show the hollow distal flap.

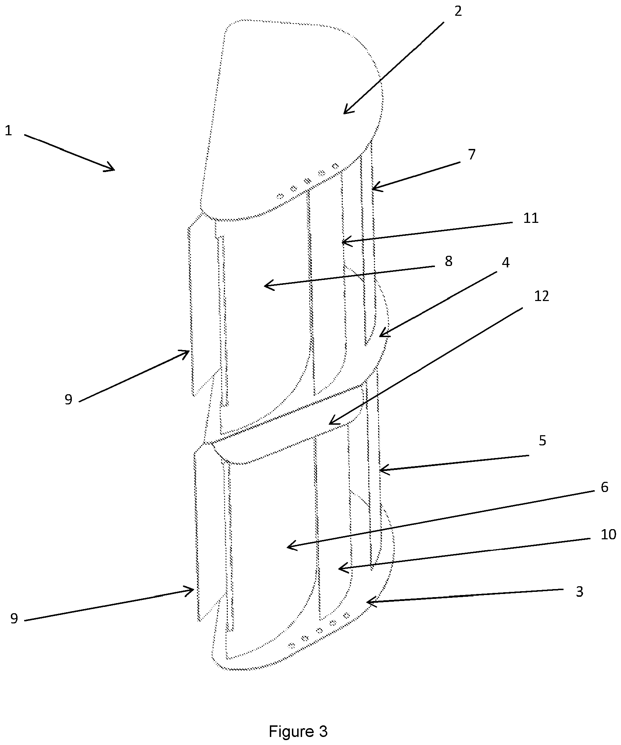

Referring to Figure 3 there is shown a special embodiment of the present invention wherein horizontal flap (12) has been provided on the middle frame. When the flap (12) is angled relative to the frame it will result in a vertical movement of the trawl door.

Vertical movement can also be achieved when the flaps (9) are moved relative to each other.

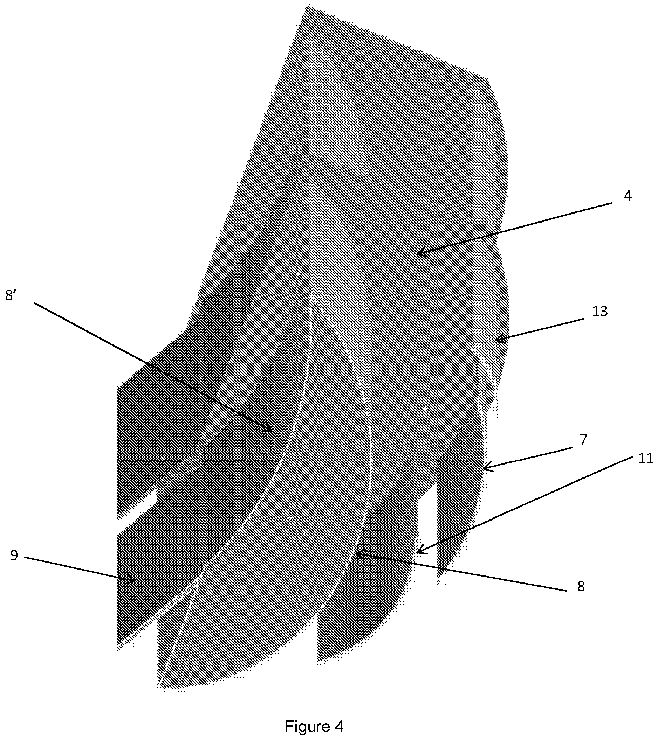

As appears from Figure 4 the spreading device may be provided with movable panels (13, only the upper shown) of aerofoil construction rotatably connected to the frames in their respective ends. Such movable panels are positioned further proximal to the respective proximal panels (7, only the upper shown). These movable panels are adapted to be controlled remotely and further assist the horizontal flaps (12) to control the position of the spreading device in the water.

## Claims

1. A spreading device, such as a trawl door (1), comprising:
an upper frame (2) defining a top edge of the device;
a lower frame (3) defining a bottom edge of the device;
a middle frame (4) defining an intermediate frame positioned between the upper (2) and lower (3) frames thereby establishing an upper and lower section;
a lower proximal panel (5) and lower distal panel (6) provided in the lower section and
connected between the lower (3) and middle (4) frames as well as an upper proximal panel (7) and an upper distal panel (8) provided in the upper section and connected between the middle (4) and upper (2) frames, said panels (5, 6, 7, 8) being of aerofoil construction and connected to the frames in their respective ends; and
flaps (9) mounted under the distal panels (6, 8) and connected to driving units, the flaps (9) adapted to be controlled remotely, when the device is in use being towed through the water;
**characterized in that**
the proximal (5, 7) and distal (6, 8) panels are placed over each other, and wherein the lower distal panel (6) and upper distal panel (8) have a distal surface (6', 8') rendering them hollow, wherein the flaps (9) constitute a part of the distal surface.

2. The spreading device of claim 1 further provided with movable panels (13) of aerofoil construction rotatably connected to the frames in their respective ends, said movable panels being positioned further proximal to the respective proximal panels (5, 7), wherein the movable panels (13) are adapted to be remotely controlled.

3. The spreading device of claim 1 or 2, wherein the flaps (9) are adapted to move relative to each other.

4. The spreading device of any one of the claims 1-3, wherein the flaps (9) are integrated in the most distal parts (6', 8') of the distal panels (6, 8).

5. The spreading device of any one the claims 1-4, wherein a lower mesial panel (10) is imposed between the lower proximal (5) and distal (6) panels.

6. The spreading device of any one the claims 1-5, wherein an upper mesial panel (11) is imposed between the upper proximal (7) and distal (8) panels.

7. The spreading device of claim 5 or 6, wherein the chord of the mesial panel (10, 11) is not parallel with the chords of the proximal (5, 7) and distal panels (6, 8).

8. The spreading device of any one the preceding claims, wherein fixation means are provided in the device for pulling after a vessel.

9. The spreading device of any one the preceding claims, wherein one or more horizontal flaps (12) are provided on the upper, middle, and/or lower frame.

10. The spreading device of any one the preceding claims, wherein the lower distal panel (6) and upper distal panel (8) have a distal surface (6', 8') rendering them hollow, wherein the flaps (9) constitute a part of the distal surface.

11. The spreading device of any one the preceding claims, wherein the distal surface (6', 8') of each distal panel (6, 8) is concave.

## Patentansprüche

1. Spreizvorrichtung, beispielweise eine Schleppnetzklappe (1), umfassend:
einen oberen Rahmen (2), der eine obere Kante der Vorrichtung definiert;
einen unteren Rahmen (3), der eine untere Kante der Vorrichtung definiert;
einen mittleren Rahmen (4), der einen Zwischenrahmen definiert, der zwischen dem oberen (2) und dem unteren (3) Rahmen positioniert ist, um dadurch einen oberen und einen unteren Abschnitt festzulegen;
eine untere proximale Platte (5) und eine untere distale Platte (6), die im unteren Abschnitt vorgesehen sind und eine Verbindung zwischen dem unteren (3) und dem mittleren (4) Rahmen herstellen, sowie eine obere proximale Platte (7) und eine obere distale Platte (8), die im oberen Abschnitt vorgesehen sind und eine Verbindung zwischen dem mittleren (4) und dem oberen Rahmen (2) herstellen, wobei die Platten (5, 6, 7, 8) in Tragflügelbauweise ausgeführt und mit den Rahmen an ihren jeweiligen Enden verbunden sind; und
Klappen (9), die unter den distalen Platten (6, 8) montiert und mit Antriebseinheiten verbunden sind, wobei die Klappen (9) ausgelegt sind, um ferngesteuert zu werden, wenn die Vorrichtung in Verwendung ist und durch das Wasser gezogen wird;
**dadurch gekennzeichnet, dass**
die proximalen (5, 7) und distalen (6, 8) Platten übereinander angeordnet sind, und wobei die untere distale Platte (6) und die obere distale Platte (8) eine distale Oberfläche (6', 8') aufweisen, die sie hohl macht, wobei die Klappen (9) einen Teil der distalen Oberfläche bilden.

2. Spreizvorrichtung nach Anspruch 1, ferner versehen mit beweglichen Platten (13) in Tragflügelbauweise, die mit den Rahmen an ihren jeweiligen Enden drehbar verbunden sind, wobei die beweglichen Platten ferner proximal zu den jeweiligen proximalen Platten (5, 7) positioniert sind, wobei die beweglichen Platten (13) ausgelegt sind, um ferngesteuert zu werden.

3. Spreizvorrichtung nach Anspruch 1 oder 2, wobei die Klappen (9) ausgelegt sind, um sich relativ zueinander zu bewegen.

4. Spreizvorrichtung nach einem der Ansprüche 1 bis 3, wobei die Klappen (9) in die distalsten Teile (6', 8') der distalen Platten (6, 8) integriert sind.

5. Spreizvorrichtung nach einem der Ansprüche 1 bis 4, wobei eine untere mesiale Platte (10) zwischen die untere proximale (5) und die untere distale (6) Platte eingeführt ist.

6. Spreizvorrichtung nach einem der Ansprüche 1 bis 5, wobei eine obere mesiale Platte (11) zwischen die obere proximale (7) und die obere distale (8) Platte eingeführt ist.

7. Spreizvorrichtung nach Anspruch 5 oder 6, wobei die Sehne der mesialen Platte (10, 11) nicht parallel zu den Sehnen der proximalen (5, 7) und distalen Platten (6, 8) ist.

8. Spreizvorrichtung nach einem der vorhergehenden Ansprüche, wobei Befestigungsmittel in der Vorrichtung vorgesehen sind, um sie hinter einem Schiff zu ziehen.

9. Spreizvorrichtung nach einem der vorhergehenden Ansprüche, wobei eine oder mehrere horizontale Klappen (12) auf dem oberen, dem mittleren und/oder dem unteren Rahmen vorgesehen sind.

10. Spreizvorrichtung nach einem der vorhergehenden Ansprüche, wobei die untere distale Platte (6) und die obere distale Platte (8) eine distale Oberfläche (6', 8') aufweisen, die sie hohl macht, wobei die Klappen (9) einen Teil der distalen Oberfläche bilden.

11. Spreizvorrichtung nach einem der vorhergehenden Ansprüche, wobei die distale Oberfläche (6', 8') jeder distalen Platte (6, 8) konkav ist.

## Revendications

1. Dispositif d'écartement, tel qu'une porte de chalut (1), comprenant :
un cadre supérieur (2) définissant un bord de dessus du dispositif ;
un cadre inférieur (3) définissant un bord de dessous du dispositif ;
un cadre médian (4) définissant un cadre intermédiaire positionné entre les cadres supérieur (2) et inférieur (3), établissant ainsi une section supérieure et une section inférieure ;
un panneau proximal inférieur (5) et un panneau distal inférieur (6) prévus dans la section inférieure et raccordés entre les cadres inférieur (3) et médian (4) ainsi qu'un panneau proximal supérieur (7) et un panneau distal supérieur (8) prévus dans la section supérieure et raccordés entre les cadres médian (4) et supérieur (2), lesdits panneaux (5, 6, 7, 8) étant de construction aérodynamique et raccordés aux cadres dans leurs extrémités respectives ; et
des battants (9) montés sous les panneaux distaux (6, 8) et raccordés à des unités d'entraînement, les battants (9) étant adaptés pour être commandés à distance, lorsque le dispositif est en utilisation en cours de remorquage dans l'eau ;
**caractérisé en ce que**
les panneaux proximaux (5, 7) et distaux (6, 8) sont placés les uns par-dessus les autres, et dans lequel le panneau distal inférieur (6) et le panneau distal supérieur (8) ont une surface distale (6', 8') les rendant creux, dans lequel les battants (9) constituent une partie de la surface distale.

2. Dispositif d'écartement selon la revendication 1, pourvu en outre de panneaux mobiles (13) de construction aérodynamique raccordés en rotation aux cadres dans leurs extrémités respectives, lesdits panneaux mobiles étant positionnés de façon davantage proximale aux panneaux proximaux (5, 7) respectifs, dans lequel les panneaux mobiles (13) sont adaptés pour être commandés à distance.

3. Dispositif d'écartement selon la revendication 1 ou 2, dans lequel les battants (9) sont adaptés pour se déplacer les uns par rapport aux autres.

4. Dispositif d'écartement selon l'une quelconque des revendications 1 à 3, dans lequel les battants (9) sont intégrés dans les parties les plus distales (6', 8') des panneaux distaux (6, 8).

5. Dispositif d'écartement selon l'une quelconque des revendications 1 à 4, dans lequel un panneau mésial inférieur (10) est imposé entre les panneaux proximal (5) et distal (6) inférieurs.

6. Dispositif d'écartement selon l'une quelconque des revendications 1 à 5, dans lequel un panneau mésial supérieur (11) est imposé entre les panneaux proximal (7) et distal (8) supérieurs.

7. Dispositif d'écartement selon la revendication 5 ou 6, dans lequel la corde du panneau mésial (10, 11) n'est pas parallèle aux cordes des panneaux proximaux (5, 7) et distaux (6, 8).

8. Dispositif d'écartement selon l'une quelconque des revendications précédentes, dans lequel des moyens de fixation sont prévus dans le dispositif pour que ce dernier soit tiré à la suite d'un bateau.

9. Dispositif d'écartement selon l'une quelconque des revendications précédentes, dans lequel un ou plusieurs battants horizontaux (12) sont prévus sur le cadre supérieur, médian et/ou inférieur.

10. Dispositif d'écartement selon l'une quelconque des revendications précédentes, dans lequel le panneau distal inférieur (6) et le panneau distal supérieur (8) ont une surface distale (6', 8') les rendant creux, dans lequel les battants (9) constituent une partie de la surface distale.

11. Dispositif d'écartement selon l'une quelconque des revendications précédentes, dans lequel la surface distale (6', 8') de chaque panneau distal (6, 8) est concave.
